# EUROPEAN PATENT SPECIFICATION

(11) **EP 3 393 803 B1**
(45) Date of publication and mention of the grant of the patent: **02.10.2019**
(21) Application number: 16822677.7
(22) Date of filing: 21.12.2016
(51) Int. Cl.: B32B 37/10, E04B 1/80, F16L 59/065

(54) **METHOD FOR MANUFACTURING VACUUM INSULATION PANELS**
VERFAHREN ZUR HERSTELLUNG EINER VAKUUMDÄMMPLATTE
PROCÉDÉ POUR FABRIQUER DES PANNEAUX D'ISOLATION À VIDE

(30) Priority: 23.12.2015 DE 102015122756
(43) Date of publication of application: 31.10.2018
(73) Proprietor: Saint-Gobain Isover, 92400 Courbevoie (FR)
(72) Inventor: JENNY, Charline, 68420 Hattstatt (FR)
(74) Representative: Kuhnen & Wacker Patent- und Rechtsanwaltsbüro PartG mbB
(86) International application number: PCT/EP2016/082251
(87) International publication number: WO 2017/108999

(56) References cited:
- DE-A1-102013 104 712
- JP-A- 2015 052 337

## Description

The invention relates to a method for manufacturing vacuum insulation panels with a fiber core.

Such vacuum insulation panels are characterized by good heat insulation properties with a comparatively small insulation thickness. Therefore, they are used primarily in areas in which the space available is restricted. As examples, refrigerators, freezers or the like have to be mentioned here. In addition, such vacuum insulation panels are, however, also used for the insulation of buildings in the building sector.

The known vacuum insulation panels have in common that they comprise a core of an open porous body which is adapted to the evacuated. This core is accommodated in a foil sleeve and is available under vacuum there. Thus, the gas heat conduction as well as the convection are largely prevented inside such a vacuum insulation panel, so that heat losses occur predominantly by solid body conduction and heat radiation.

As core materials, different open porous materials are used, such as for example foamed polyurethane or polystyrene, precipitated silica, pyrogenic silica, or the like. Due to the very low solid body conduction, fibers are also usual as a core material.

With the foil sleeves used, different modes of design are also common. Thus, plastic composite foils, e.g. in the form of a two-layer foil with a layer of HDPE of 150-200 µm and an aluminum layer of 6 to 20 µm, are frequently used. Furthermore, multi-layer foils on a plastics basis are also known in which, for instance, several plastic foils of 20 to 50 µm each with aluminizing are connected with one another, whereof the layer thickness is typically less than 3 to 5 µm, respectively. Such plastic composite foils have the advantage that they may be provided at low costs and that they may be processed with little effort. In particular, the gas-tight sealing of the foil sleeve can, as a rule, be performed without problems with plastic materials since appropriate welding seams or sealing seams can be produced without any problems. Moreover, such plastic composite foils define relatively insignificant thermal bridges in the edge-side connection area. Due to the insufficient diffusion resistance, pure plastic foils play a role with niche applications only. They are basically unsuited for applications in which a useful life of the vacuum insulation panels of years or even decades is required, such as in the building sector.

A disadvantage of such plastic composite foil sleeves is, however, that they are not completely gas-tight. The gas molecules penetrating in the course of time will destroy the vacuum. Moisture that is also penetrating will lead to heat conduction in the interior of such vacuum insulation panels. Thus, the insulating effect may be reduced substantially in the long term. Another disadvantage of such plastic foil sleeves consists in the fact that they are relatively sensitive to mechanical damage. If such a mechanical damage occurs already during transportation and in the course of processing, the vacuum is directly lost and the insulating effect is largely abolished.

An alternative are foil sleeves on the basis of metal foils such as, for instance, stainless steel foils. Such metal foils are largely gas-tight, so that an almost unlimited lifetime can be achieved. Moreover, they offer high resistance to mechanical damage.

A disadvantage of such metal foil sleeves is, however, that quite substantial thermal bridges occur in the edge region due to the high thermal conductivity of the metal. They cause a distinct reduction of the insulating effect. Moreover, such metal foils are expensive to provide and more complex to process. In particular, the welding of such metal foil sleeves is associated with much more effort than is the case with plastic foils.

In the overall design of such vacuum insulation panels, the core serves as a support body, so that it is conventionally provided as a relatively dimensionally stable molded body. If a fiber material is used for the core, a fiber material is usually employed which does not contain any binder that disintegrates under vacuum. Experience in practice has shown that negative effects are associated with the use of binders. If organic binders are used, they may disintegrate in the vacuum, so that the insulating effect then decreases due to increasing gas heat conduction. Although inorganic binders usually do not have this effect, they are difficult to handle and expensive.

For this reason, one has proceeded to use binder-free mineral wool and to compress it under thermal effect to form the core. This processing is performed depending on the respective composition of the mineral material as a rule in a temperature range between 400° C and 600° C, and thus takes place in the range of the softening point thereof. Associated therewith is a plastic deformation of the mineral fibers which results in fiber mingling of the raw material, on the one hand, and in a kind of fusion, on the other hand. Thereby a relatively dimensionally stable, but still open porous core can be achieved. Examples of such procedures are to be found in documents US 2,745,173, EP 1 892 452 B1, DE 601 24 242 T2 and EP 1 653 146 A1.

The procedures known therefrom have absolutely proven of value for achieving vacuum insulation panels with good insulating effects. They are also characterized by a relatively good manageability. However, these procedures are associated with very high energy consumption, which is in particular due to the high temperatures to be used. For this reason, the manufacturing of such mold cores of mineral wool is relatively expensive. Moreover, these method steps are also time-consuming, all the more so as the mold bodies manufactured still have to be cooled for further use.

Thus, from DE 10 2013 104 712 A1 there is known a procedure in which, in the compression step, the core blank of fibers is arranged between two cover elements and is mechanically compressed therebetween, wherein the core is kept under mechanical compression until the foil sleeve is sealed, and wherein the compression step is performed at the place of manufacture at room temperature without thermal impact.

Thus, instead of the energetically complex compressing under high temperatures, the core blank is now compressed in a cold state, which results in a substantial reduction of the energy requirement. Since the compression pressure is at the same time maintained until the production of the vacuum and the sealing of the foil sleeve, the associated, initially low dimensional stability of the core is no problem. Since process time has to be taken into account neither for heating the core blank nor for cooling, the method can be performed in a short time.

Disadvantageously, however, said method can only be performed without any problems if a metal foil, like in particular a stainless steel metal foil, is used. When, however, a plastic composite foil is used as a foil sleeve, according to the teaching of said document additional support plates have to be arranged at the large faces of the core blank, so that a wrinkling of the very flexible foil sleeve is avoided. This requires an additional method step.

From JP 2015 052337 A a method for manufacturing a vacuum insulation panel is known where the core is covered with one upper und one lower cover sheets. The core placed between the cover sheets is compressed and the cover sheets are welded at two opposite longitudinal sides, thus forming a hose like sleeve. Now the compression is released afterwards the core is dried and the sleeve is evacuated. In a final step the sleeve is welded at the two remaining open sides and, thus, completely closed. With such a method winkling of the two large surfaces of the sleeve is not securely avoided.

It is therefore an object of the invention to avoid the disadvantages of prior art and to provide a method for manufacturing vacuum insulation panels with a fiber core and a plastic composite foil as a sleeve or envelope, by which a vacuum insulation panel can be manufactured with little effort and without wrinkling of the foil sleeve at its large faces.

This object is solved by a method with the features of claim 1.

In the course of the invention it has surprisingly turned out that a wrinkling of the plastic composite foils can also be prevented by the fact that a sufficiently high compression pressure is applied. With a pressure of greater than 1 bar, the large faces of the fiber core are already compressed such that a sufficiently smooth surface is provided. Thus, the foil sections arranged thereon will keep their extended and stretched position.

This is also supported by the fact that said compression pressure is maintained until the sealing or closing of the foil sleeve. Then, due to the vacuum existing therein, the core is provided as a dimensionally stable body, so that also the foil sleeve will keep its form.

Consequently, the additional support plates used so far do not have to be used any longer, i.e. can be cancelled. Thereby the process-technological effort is reduced considerably, i.e. the method is simplified substantially.

It is also advantageous that the foil sleeve is a plastic composite foil, as thereby the usual advantages of plastic sleeves with respect to the low provision costs and the prevention of thermal bridges can be utilized.

Advantageous further developments of the method according to the invention are the subject matter of the dependent claims.

Thus, the mechanical compression can be carried out at a pressure of 2 to 10 bar. Practical tests in the course of the invention have revealed that in said range particularly advantageous surface properties of the foil sleeve as well as also particularly advantageous insulation properties can be achieved, and in addition the effort for the compression step can be limited. In this connection, in particular a range of 4 to 8 bar is preferred, wherein according to current tests particularly wrinkle-free surfaces of the foil sections in connection with particularly favorable heat insulation properties can be achieved at approximately 6 bar.

In accordance with the invention it is in addition preferred that the fibers do not comprise any binder disintegrating in vacuum, in particular no organic binder.

The fibers may be formed of a thermoplastic material having no or only a very slight disintegration under vacuum conditions. Suitable fibers of this kind consist in particular of polyethylene, polyamide or polypropylene.

Likewise, inorganic fibers, preferably textile glass fibers or mineral wool such as glass wool or rock wool, or mixtures thereof, can be used. Textile glass fibers are usually manufactured by means of nozzle drawing procedures, mineral wool may be produced by means of a dry laid or a wet laid procedure. Mixtures of organic fibers, inorganic fibers or organic-inorganic fibers may also be used, which is, however, less preferred for reasons of process technology.

It is of further advantage if the providing of the core blank comprises the drying of the core blank up to a residual moisture of less than 0.1 %. Then it is possible to keep the amount of moisture trapped in the foil sleeve particularly small, so that the heat conduction is further reduced and thus an improved damping effect can be achieved. This plays a role in particular with inorganic fibers during the manufacturing of which usually aqueous dispersions, for instance, oiling agents, are used. Thermoplastic fibers are usually produced directly from the molten mass without the presence of water, so that drying is usually not required.

Furthermore, the drying step may take place at a temperature being at least 200 K below the softening temperature of the fibers. Practical tests have revealed that, depending on the moisture content, drying temperatures of 120°C to 200°C, on average about 150°C, are particularly effective, taking into account the drying time and the energy expenditure.

Furthermore, it is also possible that the providing of the core blank may comprise the providing of a felt web of fiber material and the cutting of the felt web to a predetermined finished size. The providing of the core blank can then be integrated very well into conventional process lines and can be performed efficiently. According to requirements, a stacking of a plurality of cut felt web sections may also be performed to achieve a desired layer of the core and, hence, the insulation thickness for the vacuum insulation panels.

Alternatively, a plurality of felt webs may also be arranged one on top of each other, and then the felt web stack may be cut to the predetermined finished size.

It is of further advantage if the step of evacuating of the core enclosed with the foil sleeve is performed up to a pressure of ≤ 0.05 mbar. By means of a vacuum improved this way, an even better heat insulating effect can be achieved. This can even be increased if the pressure inside the foil sleeve is reduced in the course of the evacuation step to a value of ≤ 0.01 mbar.

If the mineral wool comprises fibers with a fiber fineness with a micronaire of less than or equal to 20 l/min which is determined pursuant to the method described in WO 2003/098209 A1, a core with particularly good support properties in combination with excellent insulating values can be achieved. In practical tests it has turned out that these advantages are achieved in a particularly favorable manner if the fibers have a fiber fineness with a micronaire of less than or equal to 15 l/min.

Moreover, it has proved to be advantageous if the felt web comprises a weight per unit area of between 800 g/m² and 2500 g/m² prior to the step of drying. Thereby a core with particularly favorable properties can be achieved.

The method according to the invention will be explained in detail in the following by means of embodiments. There show:
- Fig. 1: a schematic representation of a vacuum insulation panel manufactured according to the inventive method; and
- Fig. 2: a flowchart of the method according to the invention.

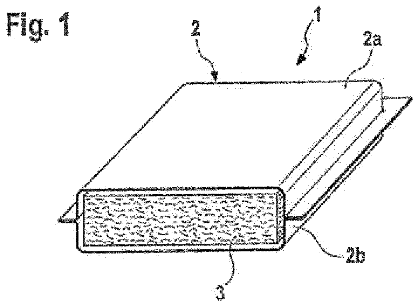

In Fig. 1 a vacuum insulation panel 1 is shown schematically in section. It comprises a foil sleeve 2 entirely enclosing a core 3.

In the embodiment according to Fig. 1 the foil sleeve 2 is designed as a plastic composite foil and comprises a two-layer structure of a HDPE layer with a thickness of 150 µm and an aluminum layer with a thickness of 6 µm. It is formed of two foil sections 2a and 2b which are welded to one another in lateral edge regions of the core 3 at projecting edge sections. A vacuum in which the internal pressure is set to approximately 0.01 mbar is available inside the foil sleeve 2. Contrary to the schematic representation in Fig. 1, the foil sleeve 2 is therefore in close contact with the core 3 in practice, wherein the core 3 serves as a support body against the external pressure. The core 3 consists of a binder-free mineral wool, here glass wool.

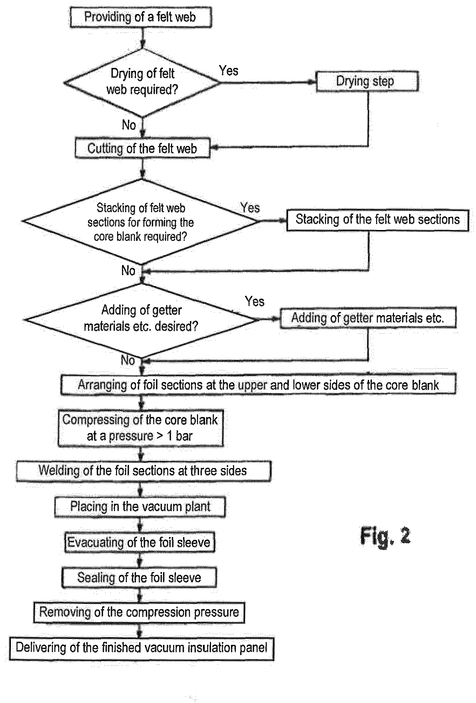

In the following, a method for manufacturing the vacuum insulation panel 1 will be explained in detail by means of the flowchart illustrated in Fig. 2:
First of all, a core blank is produced. For this purpose, a felt web of binder-free mineral wool is provided. This felt web is typically supplied in a coil shape. As a rule, a foil is available between the winding layers which prevents mingling of the fibers of the layers among each other and thus contributes to maintaining the present weight per unit area. In the illustrated embodiment this felt web has a weight per unit area of approximately 2500 g/m² and consists of fibers with a fineness with a micronaire of 12 l/min.

The mineral wool of this felt web is then dried, if required, until the residual moisture has a value of less than 0.1 %. To this end, the felt web is impacted with a temperature of approximately 150 °C for a period of approximately two minutes. This drying step of the mineral wool can be performed at the felt web as such as well as also at cut felt web sections.

The cutting of the felt web is performed here to a predetermined finished size which orients itself at the typical dimensions of such vacuum insulation panels. Usual dimensions lie in the range of between 600 mm * 300 mm and 1800 mm * 1200 mm. Cutting may be performed with suitable known methods such as, for instance, with band saws, rotating knives, water jet cutting, punching, or the like.

In the present embodiment, a plurality of felt web sections that have been cut in this manner, here three felt web sections that have been cut in this manner, are stacked on top of each other until sufficient mineral wool material, i.e. the layer required for producing the desired insulation thickness, is available.

Then, so-called getter materials, drying agents or the like are added to achieve particular functional improvements of the material of the core. These materials may be added as loose powder, sheets, etc.

Subsequently, the foil sections 2a and 2b are arranged as an enclosure or envelope at the upper and lower sides of the core blank thus formed.

In the next step, the core blank available between the two foil sections 2a and 2b is subjected to compression at a pressing power of approximately 6 bar. This compression is performed without thermal impact, that means without any heating of the material of the core, and thus at room and/or ambient temperature at the place of manufacture. In the course of this, a thickness of the core is set to approximately 25 mm and a density of the core 3 is set to approximately 300 kg/m³.

In a further step, the foil sections 2a and 2b are first of all welded to each other at three side edges, as may be seen from the projections in Fig. 1. The distance of the welding seam from the core 3 is restricted to few millimeters and amounts here to less than 5 mm.

While the foil sleeve 2 is thus closed at three sides, the core 3 remains under the compression pressure applied by the mechanical compression and keeps its predetermined thickness.

In this constellation the core 3 is placed in a vacuum plant along with the foil sleeve 2 and the interior of the foil sleeve 2 is evacuated to an internal pressure of approximately 0.01 mbar. The core 3 remains under the compression pressure until the foil sleeve 2 is closed or sealed.

In a final step the foil sleeve 2 is then also closed at the remaining open side, so that the side edges of the foil sections 2a and 2b are then welded to each other completely.

Since the desired vacuum is then available in the interior of the foil sleeve 2, the mechanical compression thereon may subsequently be cancelled. It is, however, preferred to maintain the mechanical compression until the pressure balance, i.e. the flooding of the vacuum chamber. By this measure it is possible to avoid a bulging in the vacuum which is possibly caused by restoring forces of the core material.

With the parameters set there results a vacuum insulation panel 1 with a product thickness of approximately 30 mm and a density of the core 3 of approximately 250 kg/m³.

The transfer of the core blank provided with the foil sections 2a and 2b from one processing station to the next one is performed here via suitable movable or slidable transport belts or roller tables as well as sheets or plates between which the arrangement is transported by means of a feeder or a slider. In particular in the region of the vacuum plant these processes may be performed in a robot-controlled manner.

The vacuum insulation panel 1 thus formed is then ready for transportation and may be delivered.

In the explained embodiment, the manufacturing method is typically performed discontinuously outside the manufacturing line. Under certain conditions, for instance, if a felt web with suitable parameters (weight per unit area, etc.) can be produced directly, integration into a continuously operated manufacturing line is, however, also possible.

In addition to the embodiments explained, the invention allows for further design approaches.

Thus, instead of the plastic composite foil with a two-layer structure, also a composite foil with another structure may be used for the foil sleeve 2. In another embodiment, for instance, a multi-layer plastic composite foil with, for instance, multiple aluminizing is used. In the case of minor requirements to the duration of functioning of few years, also a simple multi-layer plastic foil may be used.

Glass wool is provided here as a material for the core 3; instead, however, also rock wool, cinder wool or other inorganic fibers such as textile glass fibers, etc. may be used. Alternatively or additionally, also organic fibers may be used.

Furthermore, it is not stringently necessary that the material of the core 3 is subjected to a drying step. The degree of drying may also vary in correspondence with the requirements for the case of application, if necessary. Accordingly, the parameters for the drying step may also be adapted where required.

The providing of the core blank may also be performed in some other way than the one explained above. It is in particular not necessary to provide a felt web in coil shape. It may, for instance, also be supplied directly from a forming section in which the felt web is produced from the mineral fibers just generated. The stacking of a plurality of felt web sections may possibly also be renounced. Alternatively it is also possible to fold a felt web in a suitable manner.

The addition of getter materials, drying agents or the like for achieving particular functional improvements of the material of the core may be performed on the felt web or on a felt web section prior to stacking, so that the getter materials are arranged in the stack and not on a surface. This has the advantage that the getter materials are not in direct contact with the foil sleeves.

In the illustrated embodiment the evacuation of the vacuum insulation panel 1 or 1' is performed up to an internal pressure of 0.01 mbar. It is, however, also possible to admit a greater internal pressure of, for instance, 0.05 mbar or 0.1 mbar if the application purpose allows so. On the other hand, it may also be expedient for specific cases of application to lower the internal pressure even further to 0.001 mbar, for instance.

In the illustrated embodiments the core 3 is compressed with a pressing pressure of 6 bar in the compression step. Depending on the case of application it is, however, also possible to preset another pressing pressure in the range of 2 bar to 10 bar, whereby the corresponding thicknesses and densities of the core 3 will set during the pressing process.

Likewise, it is not necessary to use fibers with the indicated fiber fineness corresponding to a micronaire of 12 l/min. For many applications it might also be sufficient to use coarser fibers with a micronaire of less than 20 l/min.

The weight per unit area of the felt web prior to the drying step may also vary as a function of the requirements given.

## Claims

1. A method for manufacturing vacuum insulation panels (1) with a core (3) of fibers, comprising the steps of:
providing a core blank of fibers,
arranging foil sections on large faces of the core blank,
compressing the core blank to a predetermined thickness for forming the core (3), wherein in the compression step the core blank is arranged between the foil sections and is mechanically compressed therebetween, wherein the compression step is performed at the place of manufacture at room temperature without thermal impact,
connecting the foil sections for forming the foil sleeve (2), wherein a partial section of the foil sleeve (2) still remains open,
evacuating the foil sleeve (2) enveloping the core (3) up to a pressure of ≤ 1 mbar, and
complete closing of the foil sleeve (2), wherein the mechanical compression of the core (3) is maintained until a foil sleeve (2) is completely closed,
wherein the foil sleeve (2) is made of a plastic composite foil,
and wherein the mechanical compression is performed at a pressure of greater than 1 bar.

2. The method according to claim 1, **characterized in that** the mechanical compression is performed at a pressure of 2 to 10 bar, preferably of 4 to 8 bar, as well as in particular at approximately 6 bar.

3. The method according to claim 1 or 2, **characterized in that** the fibers do not comprise any binder disintegrating in vacuum, in particular no organic binder.

4. The method according to anyone of claims 1 to 3, **characterized in that** the fibers are organic fibers of a thermoplastic material, preferably of polyethylene, polyamide, or polypropylene.

5. The method according to anyone of claims 1 to 4, **characterized in that** the fibers are inorganic fibers, preferably mineral wool, in particular glass wool or rock wool, or textile glass fibers.

6. The method according to claim 5, **characterized in that** the providing of the core blank comprises the drying of the inorganic fibers of the core blank up to a residual moisture of < 0.1 %.

7. The method according to claim 6, **characterized in that** the step of drying is performed at a temperature ranging at least 200 K below the softening temperature of the fibers.

8. The method according to anyone of claims 1 to 7, **characterized in that** the providing of the core blank comprises the providing of a felt web of fibers, the cutting of the felt web to a predetermined finished size, and possibly a stacking of a plurality of cut felt web sections.

9. The method according to anyone of claims 1 to 7, **characterized in that** the providing of the core blank comprises the providing of a plurality of felt webs of fibers, the stacking of the plurality of felt webs one upon each other, and the cutting of the felt web stack to a predetermined finished size.

10. The method according to anyone of claims 1 to 9, **characterized in that** the step of evacuating the core (3) enclosed with a foil sleeve (2) is performed up to a pressure of ≤ 0.05 mbar, in particular ≤ 0.01 mbar.

11. The method according to anyone of claims 1 to 10, **characterized in that** the mineral wool comprises fibers with a fineness of fibers corresponding to a micronaire of less than or equal to 20 l/min and in particular a micronaire of less than or equal to 15 l/min.

12. The method according to anyone of claims 8 to 11, **characterized in that** the felt web comprises a weight per unit area of between 800 g/m² and 2500 g/m² prior to the step of drying.

## Patentansprüche

1. Verfahren zum Herstellen von Vakuumisolationspaneelen (1) mit einem Faserkern (3), aufweisend die folgenden Schritte:
Herstellen einer Faserkemhülse,
Anordnen von Folienabschnitten auf großen Flächen der Kernhülse,
Komprimieren der Kernhülse auf eine vorgegebene Dicke zum Bilden des Kerns (3),
wobei in dem Kompressionsschritt die Kernhülse zwischen den Folienabschnitten angeordnet wird und dazwischen mechanisch komprimiert wird, wobei der Kompressionsschritt am Herstellungsort bei Raumtemperatur ohne thermische Belastung durchgeführt wird,
Verbinden der Folienabschnitte zum Bilden eines Folienschlauches (2), wobei ein Teilabschnitt des Folienschlauches (2) immer noch geöffnet bleibt,
Evakuieren des Folienschlauches (2), der den Kern (3) umhüllt, bis zu einem Druck von ≤ 1 mbar, und
vollständiges Schließen des Folienschlauches (2), wobei die mechanische Kompression des Kerns (3) beibehalten wird, bis ein Folienschlauch (2) vollständig geschlossen ist,
wobei der Folienschlauch (2) aus einer Kunststoffverbundfolie besteht,
und wobei die mechanische Kompression bei einem Druck durchgeführt wird, der größer als 1 bar ist.

2. Verfahren nach Anspruch 1, **dadurch gekennzeichnet, dass** die mechanische Kompression bei einem Druck von 2 bis 10 bar durchgeführt wird, vorzugsweise bei 4 bis 8 bar, und besonders bei ungefähr 6 bar.

3. Verfahren nach Anspruch 1 oder 2, **dadurch gekennzeichnet, dass** die Fasern keinen Binder aufweisen, der im Vakuum zerfällt, im Besonderen keinen organischen Binder.

4. Verfahren nach einem der Ansprüche 1 bis 3, **dadurch gekennzeichnet, dass** die Fasern organische Fasern eines thermoplastischen Materials sind, vorzugsweise Polyethylen, Polyamid oder Polypropylen.

5. Verfahren nach einem der Ansprüche 1 bis 4, **dadurch gekennzeichnet, dass** die Fasern anorganische Fasern sind, vorzugsweise Mineralwolle, im Besonderen Glaswolle oder Steinwolle oder Textilglasfasern.

6. Verfahren nach Anspruch 5, **dadurch gekennzeichnet, dass** das Bereitstellen der Kernhülse das Trocknen der anorganischen Fasern der Kernhülse bis zu einer Restfeuchte von < 0,1% beinhaltet.

7. Verfahren nach Anspruch 6, **dadurch gekennzeichnet, dass** der Schritt des Trocknens bei einer Temperatur durchgeführt wird, die sich zumindest 200K unterhalb der Erweichungstemperatur der Fasern befindet.

8. Verfahren nach einem der Ansprüche 1 bis 7, **dadurch gekennzeichnet, dass** das Bereitstellen der Kernhülse das Bereitstellen eines Filznetzes aus Fasern, das Schneiden des Filznetzes auf eine vorgegebene Fertiggröße und möglicherweise ein Stapeln einer Mehrzahl von geschnittenen Filznetzabschnitten aufweist.

9. Verfahren nach einem der Ansprüche 1 bis 7, **dadurch gekennzeichnet, dass** das Bereitstellen der Kernhülse das Bereitstellen einer Mehrzahl an Filznetzen aus Fasern, das Stapeln der Mehrzahl an Filznetzen aufeinander und das Schneiden der Filznetzstapel auf eine vorgegebene Fertiggröße beinhaltet.

10. Verfahren nach einem der Ansprüche 1 bis 9, **dadurch gekennzeichnet, dass** der Schritt des Evakuierens des Kerns (3), der mit einem Folienschlauch (2) umhüllt ist, bis zu einem Druck von ≤ 0,05 mbar, im Besonderen ≤ 0,01 mbar, durchgeführt wird.

11. Verfahren nach einem der Ansprüche 1 bis 10, **dadurch gekennzeichnet, dass** die Mineralwolle Fasern mit einer Faserfeinheit aufweist, die kleiner oder gleich 20 l/min und im Besonderen kleiner oder gleich 15 1/min ist.

12. Verfahren nach einem der Ansprüche 8 bis 11, **dadurch gekennzeichnet, dass** das Filznetz vor dem Trocknungsschritt ein Flächengewicht zwischen 800 g/m² und 2500 g/m² aufweist.

## Revendications

1. Procédé de fabrication de panneaux d'isolation sous vide (1) avec un coeur (3) de fibres, comprenant les étapes consistant à :
fournir une ébauche de coeur en fibres,
aménager des sections de film sur les grandes faces de l'ébauche de coeur,
comprimer l'ébauche de coeur sur une épaisseur prédéterminée pour former le coeur (3) ; dans lequel, à l'étape de compression, l'ébauche de coeur est agencée entre les sections de film et est comprimée mécaniquement entre elles, dans lequel l'étape de compression est effectuée au lieu de fabrication à température ambiante sans impact thermique,
raccorder les sections de film pour former le manchon de film (2), dans lequel une section partielle du manchon de film (2) reste encore ouverte,
mettre sous vide le manchon de film (2) enveloppant le coeur (3) jusqu'à une pression ≤ 1 mbar, et
fermer complètement le manchon de film (2), dans lequel la compression mécanique du coeur (3) est maintenue jusqu'à ce qu'un manchon de film (2) soit complètement fermé,
dans lequel le manchon de film (2) est constitué d'un film de matière plastique composite et dans lequel la compression mécanique est effectuée à une pression supérieure à 1 bar.

2. Procédé selon la revendication 1, **caractérisé en ce que** la compression mécanique est effectuée à une pression de 2 à 10 bars, de préférence de 4 à 8 bars, ainsi qu'en particulier à environ 6 bars.

3. Procédé selon la revendication 1 ou 2, **caractérisé en ce que** les fibres ne comprennent pas de liant quelconque se désintégrant sous vide, en particulier aucun liant organique.

4. Procédé selon l'une quelconque des revendications 1 à 3, **caractérisé en ce que** les fibres sont des fibres organiques d'un matériau thermoplastique, de préférence constituées de polyéthylène, d'un polyamide ou de polypropylène.

5. Procédé selon l'une quelconque des revendications 1 à 4, **caractérisé en ce que** les fibres sont des fibres inorganiques, de préférence de la laine minérale, en particulier de la laine de verre ou de la laine de roche ou des fibres de verre textile.

6. Procédé selon la revendication 5, **caractérisé en ce que** la fourniture de l'ébauche de coeur comprend le séchage des fibres inorganiques de l'ébauche de coeur jusqu'à une humidité résiduelle de < 0,1 %.

7. Procédé selon la revendication 6, **caractérisé en ce que** l'étape de séchage est effectuée à une température se situant au moins 200 K en dessous de la température de ramollissement des fibres.

8. Procédé selon l'une quelconque des revendications 1 à 7, **caractérisé en ce que** la fourniture de l'ébauche de coeur comprend la fourniture d'une nappe feutrée de fibres, la découpe de la nappe feutrée à une taille finie prédéterminée et éventuellement un empilage d'une pluralité de sections de nappe feutrée découpées.

9. Procédé selon l'une quelconque des revendications 1 à 7, **caractérisé en ce que** la fourniture de l'ébauche de coeur comprend la fourniture d'une pluralité de nappes feutrées de fibres, l'empilage de la pluralité de nappes feutrées l'une au-dessus de l'autre et la découpe de la pile de nappes feutrées à une taille finie prédéterminée.

10. Procédé selon l'une quelconque des revendications 1 à 9, **caractérisé en ce que** l'étape de mise sous vide du coeur (3) enserré par un manchon de film (2) est effectuée jusqu'à une pression ≤ 0,05 mbar, en particulier ≤ 0,01 mbar.

11. Procédé selon l'une quelconque des revendications 1 à 10, **caractérisé en ce que** la laine minérale comprend des fibres d'une finesse de fibres correspondant à un indice micronaire inférieur ou égal à 20 l/min et en particulier un indice micronaire inférieur ou égal à 15 l/min.

12. Procédé selon l'une quelconque des revendications 8 à 11, **caractérisé en ce que** la nappe feutrée présente un poids par unité de surface compris entre 800 g/m² et 2 500 g/m² avant l'étape de séchage.
